# EUROPEAN PATENT APPLICATION

(11) **EP 4 823 133 A1**
(43) Date of publication of application: **14.10.2026**
(21) Application number: 25305518.0
(22) Date of filing: 10.04.2025
(51) Int. Cl.: H04W 4/60, H04W 8/20

(54) **SYSTEM AND METHOD FOR DISTRIBUTING EMBEDDED SUBSCRIBER IDENTITY MODULE (ESIM) PROFILES**

(71) Applicant: THALES DIS FRANCE SAS, 92190 Meudon (FR)
(72) Inventor: VALLES, Gregory, 13011 MARSEILLE (FR); BOGUSZ, François, 13600 LA CIOTAT (FR)
(74) Representative: Lotaut, Yacine Diaw

(57) **Abstract**

A system (100) and method (700) for distributing Embedded Subscriber Identity Module (eSIM) profiles is disclosed. The method (700) comprises receiving a purchase order of a plurality of eSIM profiles from an entity (114). The purchase order comprises a tag value corresponding to each of the plurality of eSIM profiles. The method (700) comprises mapping the tag value of each of the plurality of eSIM profiles with associated activation codes. Further, the method (700) comprises transmitting the activation codes associated with the plurality of eSIM profiles to the entity (114). The method (700) further comprises distributing the plurality of eSIM profiles and the associated activation codes to a plurality of entity user devices (112) via the entity (114). Further, the method (700) comprises transmitting the tag value corresponding to the eSIM profile associated with the activation codes to each of the plurality of entity user devices (112).

## Description

### FIELD OF USE

The present disclosure relates to a field of telecommunications, and more specifically to a system and method for distributing Embedded Subscriber Identity Module (eSIM) profiles.

### BACKGROUND

The growing adoption of Embedded Subscriber Identity Module (eSIM) technology has enabled seamless connectivity by allowing users to download and manage mobile network profiles digitally. This innovation has created opportunities for travel companies, airlines, and other third-party service providers to offer eSIM services to their customers. In particular, the eSIM travel use case has gained significant traction, where users need the ability to download eSIM profiles from multiple Mobile Network Operators (MNOs) directly through a single mobile application.

Further, the third-party service providers often partner with the MNOs to distribute eSIM "activation codes" to their customers. The activation codes allow end-users to download and activate corresponding eSIM profiles from the MNO's Subscription Management Data Preparation (SM-DP+) platform via the third-party mobile application. However, a technical challenge arises in ensuring the proper alignment of eSIM profile metadata with the mobile application's signature to comply with Android's carrier privilege rules, as defined by the proprietary tag BF76 mechanism. The MNOs are required to configure the tag BF76 in the eSIM profile metadata to match the digital signature of the third-party mobile application that may download the profile. This ensures that the mobile application has the necessary carrier privileges to manage the profile. However, when MNOs wholesale eSIM profiles to multiple third-party companies, such as travel agencies or airlines, it becomes impractical for the MNO to predict which mobile app will be used by which end user.

Thus, the MNOs are forced to maintain separate stocks of eSIM profiles for each third-party service provider, with the tag BF76 pre-configured to match the respective mobile app's signature. This approach leads to significant operational inefficiencies, including increased complexity in stock management, higher costs, and reduced scalability. On the other hand, third-party companies face the burden of coordinating with multiple MNOs to ensure the proper configuration of the tag BF76 for the activation codes they purchase, further complicating the process. The conventional methods for managing and distributing eSIM profiles are not scalable and fail to address the dynamic needs of the travel and telecommunications sectors.

Therefore, there is a need for a more efficient, flexible, and scalable solution to streamline eSIM profile management while maintaining compliance with carrier privilege rules and ensuring seamless user experiences.

### SUMMARY

The following embodiments presents a simplified summary in order to provide a basic understanding of some aspects of the disclosure. This summary is not an extensive overview, and it is not intended to identify key/critical elements or to delineate the scope thereof. Its sole purpose is to present some concepts in a simplified form as a prelude to the more detailed description that is presented later.

Some example embodiments disclosed herein provide a method for distributing Embedded Subscriber Identity Module (eSIM) profiles, the method comprising receiving, by a Subscription Manager Data Preparation Plus (SM-DP+), a purchase order of a plurality of eSIM profiles from an entity. The purchase order comprises a tag value corresponding to each of the plurality of eSIM profiles. Further, the method comprising mapping, by the SM-DP+, the tag value of each of the plurality of eSIM profiles with associated activation codes. The method further comprising transmitting, by the SM-DP+, the activation codes associated with the plurality of eSIM profiles to the entity. Further, the method comprising distributing, by the SM-DP+, the plurality of eSIM profiles and the associated activation codes to a plurality of entity user devices via the entity. The method comprising transmitting, by the SM-DP+, the tag value corresponding to the eSIM profile associated with the activation codes to each of the plurality of entity user devices.

According to some example embodiments, the purchase order of the entity is placed with a Mobile Network Operator (MNO) or an eSIM broker.

According to some example embodiments, the plurality of entity user devices comprises a Local Profile Assistant (LPA) Application Programming Interface (API) configured to connect with the SM-DP+.

According to some example embodiments, the method comprising mapping the tag value comprises receiving, by the SM-DP+, the tag value as input. An Application Programming Interface (API) is configured within the SM-DP+ for receiving the tag value.

According to some example embodiments, the method comprising transmitting the tag value to each of the plurality of entity user devices comprises setting, by the SM-DP+, the tag value in the eSIM profile metadata. Further, the method comprising enabling, by the SM-DP+, each of the plurality of entity user devices to download the eSIM profile via an application.

Some example embodiments disclosed herein provide a system for distributing Embedded Subscriber Identity Module (eSIM) profiles, the system comprises an entity configured to order a plurality of eSIM profiles. Further, the system comprises a plurality of entity user devices configured to download at least one eSIM profile from the entity. The system further comprises a processing engine coupled to a memory. The processing engine is configured to execute instructions stored in the memory to receive a purchase order of a plurality of eSIM profiles from an entity. The purchase order comprises a tag value corresponding to each of the plurality of eSIM profiles. Further, the processing engine is configured to execute instructions stored in the memory to map the tag value of each of the plurality of eSIM profiles with associated activation codes at a Subscription Manager Data Preparation Plus (SM-DP+). The processing engine is configured to execute instructions stored in the memory to transmit the activation codes associated to the plurality of eSIM profiles to the entity. Further, the processing engine is configured to execute instructions stored in the memory to distribute the plurality of eSIM profiles and the associated activation codes to a plurality of entity user devices via the entity. The processing engine is configured to execute instructions stored in the memory to transmit the tag value corresponding to the eSIM profile associated with the activation codes from the SM-DP+ to each of the plurality of entity user devices.

According to some example embodiments, to map the tag value, the processing engine (104) is configured to configure an Application Programming Interface (API) within the SM-DP+. The SM-DP+ is configured to accept the tag value as input. The processing engine is configured to verify the tag value matches a signature of the plurality of entity user devices.

Some example embodiments disclosed herein provide a method for distributing Embedded Subscriber Identity Module (eSIM) profiles, the method comprises transmitting, by an entity user device, a purchase order of a plurality of eSIM profiles to an operator via an entity. The purchase order comprises a tag value corresponding to each of the plurality of eSIM profiles. Further, the method comprises receiving, by the entity user device, the plurality of eSIM profiles and the associated activation codes from a Subscription Manager Data Preparation Plus (SM-DP+). The SM-DP+ comprises the tag value corresponding to each of the plurality of eSIM profiles associated with the activation codes. Further, the method comprises retrieving, by the entity user device, the tag value corresponding to the eSIM profile and the associated activation code from the SM-DP+.

According to some example embodiments, the entity user device is associated with the entity.

According to some example embodiments, the method further comprises verifying, by the entity user device, the tag value matches a signature of the entity user device.

According to some example embodiments, retrieving the plurality of eSIM profiles and the associated activation codes comprises initiating, by the entity user device, the LPA API to connect with the SM-DP+.

### DEFINITIONS

The term "Embedded Subscriber Identity Module (eSIM)" as used herein in the specification may refer to a digital SIM card that is embedded directly into a device, such as a smartphone, tablet, smartwatch, or IoT device. Unlike traditional physical SIM cards, which are removable and require manual insertion, an eSIM is a programmable component that is soldered into the device's hardware during manufacturing.

The term "Embedded Universal Integrated Circuit Card (eUICC)" as used herein in the specification may refer to a type of SIM card used in devices such as smartphones, tablets, and IoT devices that support eSIM technology. Unlike traditional SIM cards, which are physical cards that are inserted into a device, an eUICC is embedded directly into the device's hardware. The eUICC allows users to remotely manage and switch mobile network profiles without needing to physically swap SIM cards. This flexibility is particularly useful for use cases such as global roaming, IoT applications, and eSIM-enabled devices, as it enables seamless switching between different mobile network operators (MNOs) or service providers.

The term "eSIM profile" as used herein in the specification may refer to a digital equivalent of a traditional physical SIM card. The eSIM profile contains necessary information and configurations to enable a device to connect to a mobile network. The eSIM profiles are stored and managed electronically on an eSIM, a programmable SIM card integrated directly into a device.

The term "BF76 tag" as used herein in the specification may refer to a proprietary metadata field defined in Android's eSIM architecture to enforce carrier privilege rules. The rules ensure that only authorized mobile applications can manage specific eSIM profiles stored on a device's embedded Universal Integrated Circuit Card (eUICC).

The term "Subscription Manager Data Preparation Plus (SM-DP+)" as used herein in the specification may refer to a key component of the eSIM ecosystem defined in the GSMA Remote SIM Provisioning (RSP) architecture. The SM-DP+ is responsible for securely managing and delivering eSIM profiles to eUICC-enabled devices.

The term "Mobile Network Operator (MNO)" as used herein in the specification may refer to a telecommunications company that provides wireless communication services to customers. The MNO owns or controls the infrastructure necessary for delivering these services, including network towers, spectrum licenses, and core network systems.

The term "Android eUICC Manager Application Programming Interface (API)" as used herein in the specification may refer to a set of programming interfaces provided by the Android operating system that allow applications to interact with and manage embedded Universal Integrated Circuit Card (eUICC) functionality, specifically for devices that support eSIM technology. The APIs enable developers to integrate eSIM-related operations directly into their applications.

### BRIEF DESCRIPTION OF DRAWINGS

The above and still further example embodiments of the present disclosure will become apparent upon consideration of the following detailed description of embodiments thereof, especially when taken in conjunction with the accompanying drawings.
FIG. 1 illustrates a block diagram of an exemplary system for distributing Embedded Subscriber Identity Module (eSIM) profiles, in accordance with an exemplary embodiment;
FIG. 2 illustrates a functional block diagram of various modules within a memory of the system for distributing the eSIM profiles, in accordance with an exemplary embodiment;
FIGs. 3A and 3B illustrate an exemplary flow chart of a system for distributing the eSIM profiles, in accordance with an exemplary embodiment;
FIG. 4 illustrates an exemplary flow chart of a system for distributing the eSIM profiles, in accordance with an exemplary embodiment;
FIG. 5 illustrates an exemplary flow chart of a system for retrieving the eSIM profiles from a Subscription Manager Data Preparation Plus (SM-DP+), in accordance with an exemplary embodiment;
FIG. 6 illustrate an exemplary flow chart of a system for distributing the eSIM profiles, in accordance with an exemplary embodiment;
FIG. 7 illustrates an exemplary flow chart of a method for distributing the eSIM profiles, in accordance with an exemplary embodiment; and
FIG. 8 illustrates an exemplary computing system for implementation of a method for distributing the eSIM profiles, in accordance with an exemplary embodiment.

The figures illustrate embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, systems, apparatuses, and methods are shown in block diagram form only in order to avoid obscuring the present disclosure.

Reference in this specification to "one embodiment" or "an embodiment" or "example embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

The terms "comprise", "comprising", "includes", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

The rapid adoption of Embedded Subscriber Identity Module (eSIM) technology has revolutionized mobile connectivity by enabling users to activate multiple carrier profiles on a single device. The innovation has fostered convenience and flexibility, especially for users traveling across different regions. However, managing eSIM profiles effectively, particularly in scenarios where third-party applications interact with multiple carriers, poses significant challenges. In an embodiment, the eSIM profiles must comprise metadata such as tag BF76 to align with the carrier application's privileges. This is straightforward for single carriers managing their profiles.

However, challenges arise in the eSIM travel use case where multiple mobile network operators (MNOs) sell activation codes to third-party companies such as airlines, or travel agencies for distribution. Each third-party company's mobile application requires a unique tag BF76 signature in the eSIM profile metadata, necessitating that MNOs maintain separate stocks of profiles configured for each partner, leading to high costs, inefficiencies, and scalability issues. Furthermore, the third-party companies must ensure compatibility by coordinating extensively with each MNO partner to manage the configurations.

Further, the conventional methods of distributing eSIM profiles often leads to inefficiencies, potential privacy risks, and excessive network bandwidth usage. In an embodiment, the MNOs maintain separate profile stocks with specific configurations for each third-party partner, increasing operational complexity and costs. Further, a single profile is configured with multiple signatures in tag BF76, but limitations in device compatibility and tag size (max 127 bytes) restrict this approach. Relying on one global connectivity provider simplifies the process but lacks the flexibility to choose competitive regional pricing.

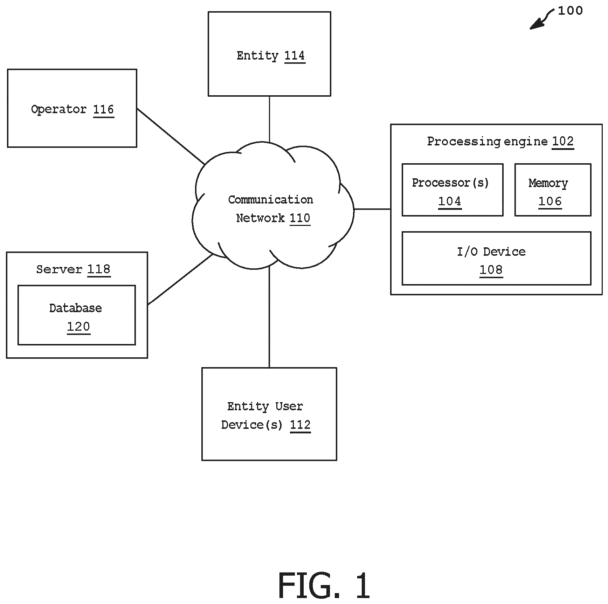

Embodiments of the present disclosure may provide a method and a system for distributing eSIM profiles to end users. The proposed disclosure eliminates the need for segregating stocks of eSIM profiles by introducing a dynamic mechanism for setting the tag BF76 value at the time of eSIM profile download. A proprietary API within the SM-DP+ is developed, enabling the MNO to dynamically associate a specific tag BF76 signature to an eSIM profile based on the activation code. Such a solution would improve scalability, optimize network performance, protect user privacy, and enhance the overall user experience. The method and a system for providing a secure and efficient way to distribute a plurality of eSIM profiles to the end users of an entity, are described with reference to FIG. 1 to FIG. 7 as detailed below.

FIG. 1 illustrates a block diagram of an exemplary system 100 for distributing Embedded Subscriber Identity Module (eSIM) profiles, is illustrated, in accordance with an exemplary embodiment. The system 100 may comprise a processing engine 102, an entity user device 112, an entity 114, an operator 116, and a server 118 communicatively coupled to each other through a wired or wireless communication network 110. The processing engine 102 may comprise a processor 104, a memory 106 and an input/output (I/O) device 108.

In an embodiment, examples of processor(s) 104 may comprise, but are not limited to, microcontrollers, microprocessors, digital signal processors (DSPs), application-specific integrated circuits (ASICs), field-programmable gate arrays (FPGAs), system-on-chip (SoC) components, or any other suitable programmable logic devices. The processor 104 is responsible for executing the instructions stored in the memory 106 to carry out the functionality of the system 100, including distributing the eSIM profiles to the entity user devices 112.

In an embodiment, the memory 106 may store instructions and data, including one or more modules that, when executed by the processor 104, may cause the processor 104 to distribute eSIM profiles, as will be discussed in greater detail herein below. In an embodiment, the memory 106 may be a non- volatile memory or a volatile memory. In an embodiment, the memory 106 may also store a single module or a combination of different modules to distribute the eSIM profiles to the entity user devices 112. Examples of non-volatile memory may comprise but are not limited to, a flash memory, a Read Only Memory (ROM), a Programmable ROM (PROM), Erasable PROM (EPROM), and Electrically EPROM (EEPROM) memory. Further, examples of volatile memory may comprise but are not limited to, Dynamic Random Access Memory (DRAM), and Static Random-Access memory (SRAM).

In an embodiment, the I/O device 108 may comprise of variety of interface(s), for example, interfaces for data input and output devices, and the like. The I/O device 108 may facilitate inputting of instructions by a user communicating with the processing engine 102. In an embodiment, the I/O device 108 may be wirelessly connected to the processing engine 102 through wireless network interfaces such as Bluetooth^{®}, infrared, or any other wireless radio communication known in the art. In an embodiment, the I/O device 108 may be connected to a communication pathway for one or more components of the processing engine 102 to facilitate the transmission of inputted instructions and output results of data generated by various components such as, but not limited to, processor(s) 104 and memory 106.

In an embodiment, the entity 114 may be an organisation that acts as an intermediary to provide eSIM services to end-users such as the entity user devices 112. The entity 114 may be a travel agency, an airline, an enterprise, etc. The entity 114 may purchase bulk eSIM profiles and corresponding activation codes from the operator 116 for the entity user devices 112 to enhance their service offerings, particularly in the eSIM travel use case, where seamless connectivity is critical for travellers. The entity 114 may allow users to download the eSIM profile and the corresponding activation code directly onto the entity user device 112 such as smartphones, tablets, or any other handheld device powered by android operating system. Further, the entity 114 may provide the entity user device 112 with a dedicated mobile application for managing eSIM profiles. The application interacts with the eSIM profile download process, requiring carrier privilege metadata such as tag BF76 aligned with the application's signature. The entity 114 may communicate with the processing engine 102, entity user device 112, the operator 116 and the server 118 via the communication network 110. Further, the entity 114 may receive instructions from the processing engine 102 to perform specific functions such as, distributing the purchased eSIM profiles to the entity user devices 112 and transmitting activation codes to the entity user devices 112.

In an embodiment, the operator 116 may be a Mobile Network Operator (MNO) or an eSIM broker. The MNO may be a telecommunication company that provide wireless communications services, such as cellular network connectivity, to the entity 114. The MNOs own and operate the infrastructure necessary to deliver the telecommunication services, including cell towers and core network systems. Further, the eSIM broker may be a third-party company that buys or rents eSIM profiles from the MNO and then further sell the eSIM profiles to the entity 114. In simpler words, the eSIM broker may act as an intermediary between the MNO and the entity 114. The operator 116 may comprise a plurality of eSIM profiles along with the corresponding activation codes stored in a Subscription Manager Data Preparation (SM-DP+). The SM-DP+ may provide the eSIM profiles and the activation codes to the entity user devices 112. The operator 116 may be communicatively coupled to the entity 114 and the processing engine 102 through the communication network 110.

In an embodiment, the server 118 may be enabled in a remote cloud server or a co-located server and may comprise a database 120 for retaining various data inputs and outputs necessary for operations of the system 100. In an embodiment, the server 118 may store data input by the entity user device 112 or output generated by the processing engine 102. In an embodiment, the processing engine 102 may be communicably coupled with the server 118 through the communication network 110.

In an embodiment, the communication network 110 may be a wired or a wireless network or a combination thereof. The communication network 110 can be implemented as one of the different types of networks, such as but not limited to, ethernet IP network, intranet, local area network (LAN), wide area network (WAN), or a Metropolitan Area Network (MAN). Various devices in the system 100 may be configured to connect to the communication network 110, in accordance with various wired and wireless communication protocols. Examples of such wired and wireless communication protocols may comprise, but are not limited to, a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols. Further the communication network 110 may comprise a variety of network devices, including routers, bridges, servers, computing devices, storage devices, and the like.

In an embodiment, the processing engine 102 may receive a purchase order of a plurality of eSIM profiles from an entity 114 through the communication network 110. The purchase order comprises a tag value corresponding to each of the plurality of eSIM profiles. The tag may be a tag BF76 that specifies the unique signature associated with the entity user device 112. The inclusion of the tag BF76 ensures that when the profiles are downloaded by entity user devices 112 through the entity's application, the processing engine 102 enforces proper carrier privileges, enabling seamless activation and management of the eSIM profiles. Further, the processing engine 102 may map the tag value of each of the plurality of eSIM profiles with associated activation codes in the SM-DP+. The processing engine 102 may receive the tag value as input from the entity 114. An Application Programming Interface (API) is configured within the SM-DP+ (304) for receiving the tag value. The API eliminates the need for pre-configured eSIM profiles with fixed tags, streamlining the management of eSIM profiles across multiple third-party entities 114.

In an embodiment, the processing engine 102 may transmit the activation codes associated with the plurality of eSIM profiles to the entity 114. By sending the activation codes, the processing engine 102 enables the entity 114 to distribute them further to entity user devices 112 through its proprietary mobile application or other interfaces. The activation codes serve as unique identifiers that allow the entity user devices 112 to download and activate specific eSIM profiles via the SM-DP+ platform. Further, the processing engine 102 distribute the plurality of eSIM profiles and the associated activation codes to a plurality of entity user devices 112 via the entity 114. The processing engine 102 ensures that the eSIM profiles are appropriately configured and tagged with tag BF76 to align with the specific mobile applications of the entity 114. The processing engine 102 further transmit the tag value corresponding to the eSIM profile associated with the activation codes to each of the plurality of entity user devices 112. The tag value is transmitted to the entity user devices 112, ensuring that the eSIM profiles can be successfully downloaded and managed by the mobile applications installed on the entity user devices 112. By dynamically associating and transmitting the tag BF76 value, the processing engine 102 eliminates the need for pre-configured profile stocks, simplifies compatibility management, and ensures a seamless end-user experience.

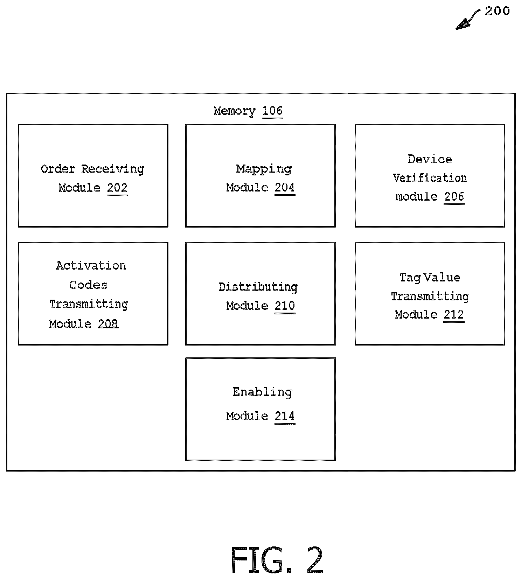

FIG. 2 illustrates a functional block diagram 200 of various modules within the memory 106 of the system 100 for distributing the eSIM profiles, in accordance with an exemplary embodiment. In an embodiment, the memory 106 may comprise an order receiving module 202, a mapping module 204, a device verification module 206, an activation codes transmitting module 208, a distributing module 210, a tag value transmitting module 212 and an enabling module 214.

The order receiving module 202 may be configured for receiving a purchase order of a plurality of eSIM profiles from an entity 114. The purchase order comprises a tag value corresponding to each of the plurality of eSIM profiles. The purchase order specifies a plurality of eSIM profiles required by the entity 114, along with a corresponding tag value such as tag BF76 for each eSIM profile. The tag BF76 ensures that the eSIM profiles are configured with carrier privilege rules aligning with the digital signature of the entity user devices 112. By including this tag value in the purchase order, the entity 114 dynamically associates the correct tag BF76 with the relevant eSIM profiles during the booking and provisioning process.

The mapping module 204 may be configured for mapping the tag value of each of the plurality of eSIM profiles with associated activation codes by the SM-DP+. The mapping module 204 is responsible for associating the tag value such as tag BF76 with the activation codes of the eSIM profiles during the provisioning process managed by the SM-DP+. The SM-DP+ may store the plurality of eSIM profiles and the associated tag value corresponding to the purchase order of the entity 114. In an embodiment, the operator 116 may configure an Application Programming Interface (API) within the SM-DP+. The SM-DP+ is configured to accept the tag value as input. The API may serve as an interface that allows the SM-DP+ to accept the tag value as an input parameter, facilitating the seamless and flexible management of eSIM profiles. The API may be called during various stages, such as when booking eSIM profiles, confirming orders such as via an ES2+.confirmOrder mechanism, or preparing eSIM profiles for download.

The device verification module 206 is responsible for verifying that the tag value matches a signature of the plurality of entity user devices 112. In an embodiment, the device verification module 206 ensures that the eSIM profile being downloaded and activated by entity user device 112 is authorized for use on the specific entity's mobile application installed on the user's device. The device verification module 206 achieves this by verifying that the tag BF76 in the eSIM profile metadata matches the digital signature of the application or entity user device 112 requesting the eSIM profile.

The activation codes transmitting module 208 may be configured for transmitting the activation codes associated with the plurality of eSIM profiles to the entity 114. In an embodiment, each eSIM profile provisioned by the SM-DP+ is uniquely identified by an activation code. The activation codes are mapped to the appropriate tag BF76, which ensures that the eSIM profile is compatible with the mobile application authorized by the entity 114. Once the mapping is completed, the activation codes transmitting module 208 securely sends the activation codes to the entity 114. The transmission of activation codes enable the entity 114 to provide the activation codes to the entity user devices 112 via their mobile application or other distribution channels.

The distributing module 210 may be configured for distributing the plurality of eSIM profiles and the associated activation codes to a plurality of entity user devices 112 via the entity 114 application. The entity user device 112 may request for the eSIM profile from the entity 114. Further, the entity 114 may allocate and distribute one of the plurality of eSIM profile along with the tag BF76 value to the entity user device 112.

The tag value transmitting module 212 is configured for transmitting the tag value corresponding to the eSIM profile associated with the activation codes to each of the plurality of entity user devices 112 from the SM-DP+. The tag value transmitting module 212 ensures that the correct tag BF76 is securely transmitted to each entity user device 112 as part of the eSIM profile provisioning process. The tag value transmitting module 212 works in conjunction with the SM-DP+ to deliver the tag value associated with the eSIM profile and its activation code, ensuring proper configuration and authorization. In an embodiment, when an end-user device requests an eSIM profile through the entity's application, the SM-DP+ identifies the appropriate tag BF76 associated with the activation code for the requested eSIM profile.

The enabling module 214 is configured for enabling each of the plurality of entity user devices 112 to download the eSIM profile via an application. In an embodiment, the enabling module 214 is responsible for facilitating each entity user devices 112 to download its assigned eSIM profile through the entity's application. The enabling module 214 ensures that the download process is securely initiated and completed, maintaining compatibility with the application and ensuring compliance with provisioning requirements. Before enabling the download, the enabling module 214 ensures that the entity user device 112 and the application meet all necessary security and carrier privilege requirements. The enabling module 214 may verifies the tag BF76 to confirm that the requesting application is authorized to manage the eSIM profile. Once verification is complete, the enabling module 214 enables the SM-DP+ to deliver the eSIM profile securely to the entity user device 112.

It should be noted that all such aforementioned modules 202-214 may be represented as a single module or a combination of different modules. Further, as will be appreciated by those skilled in the art, each of the modules 202-214 may reside, in whole or in parts, on one device or multiple devices in communication with each other. In some embodiments, each of the modules 202-214 may be implemented as dedicated hardware circuit comprising custom application-specific integrated circuit (ASIC) or gate arrays, off-the-shelf semiconductors such as logic chips, transistors, or other discrete components. Each of the modules 202-214 may also be implemented in a programmable hardware device such as a field programmable gate array (FGPA), programmable array logic, programmable logic device, and so forth. Alternatively, each of the modules 202-214 may be implemented in software for execution by various types of processors (e.g. processor 104). An identified module of executable code may, for instance, comprise one or more physical or logical blocks of computer instructions, which may, for instance, be organized as an object, procedure, function, or other construct. Nevertheless, the executables of an identified module or component need not be physically located together but may comprise disparate instructions stored in different locations which, when joined logically together, comprise the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for distributing eSIM profiles. For example, the exemplary system 100 and the associated processing engine 102 may distribute the eSIM profiles by the processes discussed herein. In particular, as will be appreciated by those of ordinary skill in the art, control logic and/or automated routines for performing the techniques and steps described herein may be implemented by the system 100 and the associated processing engine 102 either by hardware, software, or combinations of hardware and software. For example, suitable code may be accessed and executed by the one or more processors on the system 100 to perform some or all of the techniques described herein. Similarly, application specific integrated circuits (ASICs) configured to perform some, or all of the processes described herein may be comprised in the one or more processors on the system 100.

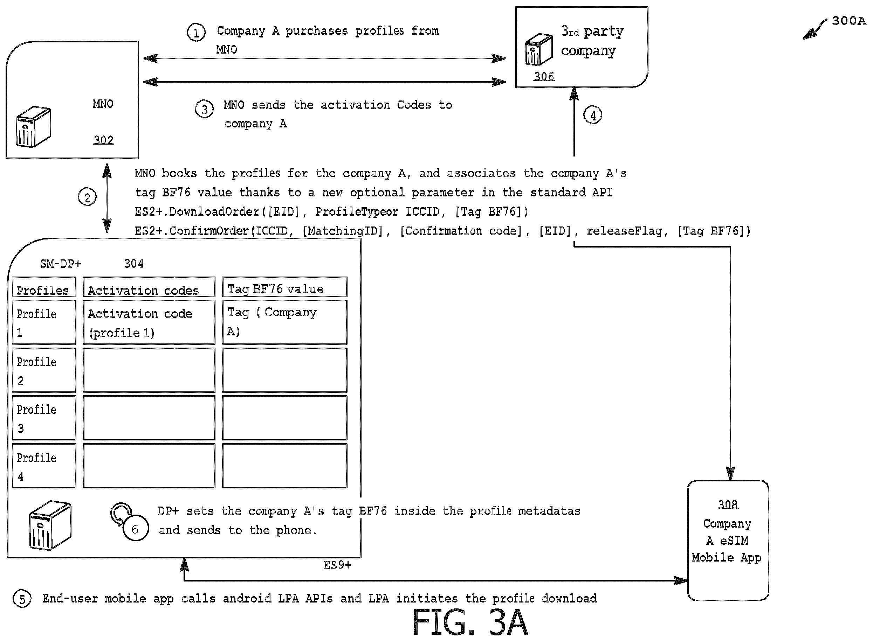

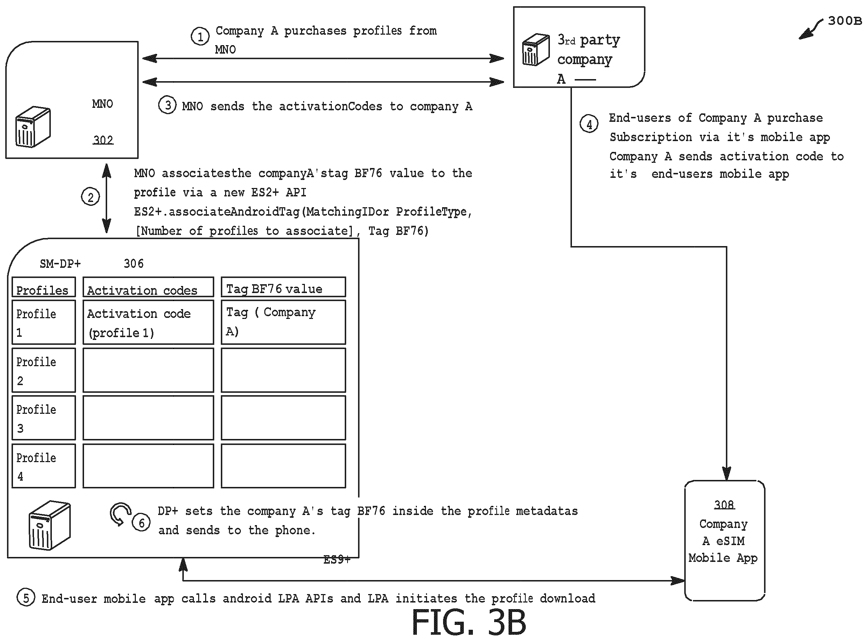

FIGs. 3A and 3B illustrate an exemplary flow chart of a system 300A and 300B for distributing the eSIM profiles, in accordance with an exemplary embodiment. FIGs. 3A and 3B are explained in conjunction with FIGs. 1 and 2. The system 300A, 300B (cumulatively referred as the system 300) may comprise an operator 302, a Subscription Management Data Preparation Plus (SM-DP+) (304), an entity 306, and an entity user device 308 connected via a communication network.

In an embodiment, the operator 302 may be a Mobile Network operator (MNO) responsible for creating and managing eSIM profiles. The operator 302 acts as the supplier of eSIM profiles to the entity 306 such as travel companies, airlines, or enterprises. The operator 302 sells eSIM profiles and activation codes to the entity 306. The operator 302 integrates with the SM-DP+ platform 304 to associate profiles with specific tag values such as Tag BF76 for secure and tailored distribution of the eSIM profiles.

In an embodiment, the entity 306 may be a business that purchase eSIM profiles and activation codes from the operator 302 to distribute them to the entity user device 308. The entity 306 uses its own mobile application to provide eSIM profile download and activation services to the entity user devices 308. For example, a company A's application can only support profiles that are tagged with its unique Tag BF76 value.

In an embodiment, the SM-DP+ 304 may be a backend system that handles the preparation and distribution of eSIM profiles to entity user devices 308. The SM-DP+ 304 Stores profiles, activation codes, and associated metadata, including Tag BF76 values. Further, the SM-DP+ 304 may configure the metadata of eSIM profiles such as by embedding the Tag BF76 value into profile data. In an embodiment, the SM-DP+ 304 ensures that only eSIM profiles associated with the correct tag values are downloaded by authorized entity user device 308.

In an embodiment, the entity user device 308 are computing devices configured to support eSIM profiles. The entity user device 308 are associated with the employees or clients of the entity 306. The entity user device 308 may comprise an application associated with the entity 306. The application may be used by entity user device 308 to purchase subscriptions, receive activation codes, and initiate the eSIM profile download. Further, the application may communicate with the SM-DP+ 304 via Application Programming Interface (API) to initiate downloading of the eSIM profile.

FIG. 3A depicts an exemplary flow chart of the system 300A for distributing the eSIM profiles, in accordance with an exemplary embodiment. In an embodiment, the entity 306 may establish an agreement with the operator 302 to purchase a batch of eSIM profiles. Further, the operator 302 receives a purchase order from the entity 306, specifying the quantity and type of eSIM profiles. The purchase order may comprise a unique identifier such as tag BF76 that is specific to the entity 306. The tag BF76 ensures that the eSIM profiles may only be accessed and activated through entity 114 mobile application. In an embodiment, the tag BF76 is part of the metadata configuration for the purchased eSIM profiles.

Further, the operator 302 may logs into the SM-DP+ 304 to process the entity 306 purchase order of eSIM profiles. The SM-DP+ 304 may prepare the requested eSIM profiles, associates them with activation codes, and integrates the specified tag BF76 into the eSIM profile metadata. In an embodiment, the operator 302 may utilizes an enhanced Application Programming Interface (API) to configure the eSIM profiles with the tag BF76. The API may be a ES2+.DownloadOrder configured to download order to the SM-DP+ 304, specifying parameters such as an Entity User Identifier (EID) or an Integrated Circuit Card Identifier (ICCID) and the tag BF76. Further, the API may be a ES2+.ConfirmOrder configured to confirm the purchase order and provide additional details such as the ICCID and the tag BF76 to ensure that the eSIM profile is only accessible to entity 306 mobile application. Further, the operator 302 updates a database to store the eSIM profiles, the associated activation codes, and the tag BF76.

Upon configuring the eSIM profiles in the SM-DP+ 304, the operator 302 generates unique activation codes for each eSIM profile. The activation codes are linked to the corresponding tag BF76 and are then transmitted to the entity 306. The entity 306 stores the activation codes securely and prepares them for distribution to the entity user devices 308 through the mobile application. Further, the entity user device 308 interacts with the entity's mobile application to purchase an eSIM subscription. The user of the entity user device 308 may select a plan or service offering, completes the payment, and receives the activation code from the SM-DP+. The activation code is delivered to the entity user device 308 via the entity's mobile application.

In an embodiment, the entity user device 308 initiates the eSIM profile download process through the entity's mobile application. The mobile application interacts with an Android Local Profile Assistant (LPA) APIs to request the eSIM profile from the SM-DP+. The entity user device 308 submits the activation code and the tag value as part of the request, which serves as a unique identifier for the app and its authorized profiles. The LPA communicates with the SM-DP+ 304 using an ES9+ API, verifying the activation code and tag value. The ES9+ API facilitates communication between the SM-DP+ 304 and the Embedded Universal Integrated Circuit Card (eUICC) in entity user device 308. The ES9+ API is essential for delivering, enabling, disabling, or deleting eSIM profiles on the eUICC.

Upon receiving the profile download request from the entity user device 308, the SM-DP+ 304 validates the activation code and the tag BF76. The SM-DP+ 304 locates the corresponding eSIM profile in its database and confirms that the tag BF76 matches the application's signature. Further, the SM-DP+ 304 embeds the tag BF76 into the eSIM profile metadata for added security. The eSIM profile is transmitted to the entity user device 308 via the ES9+ API, ensuring the eSIM profile is downloaded securely and is fully compatible with the mobile application. Once the profile is installed, the entity user device 308 may begin using the eSIM service provided by the entity 308.

FIG. 3B depicts an exemplary flow chart of the system 300B for distributing the eSIM profiles, in accordance with an exemplary embodiment. In an embodiment, the entity initiates a purchase order to the operator 302 for a plurality of eSIM profiles. The purchase order may specify the number of profiles required, the type of profiles, and the necessary configurations. A unique tag value such as tag BF76 is comprised in the purchase order to associate the eSIM profiles with the entity 306, ensuring only their application may manage the eSIM profiles.

Further, the operator 302 processes the purchase order using the SM-DP+ 304. A new API function, ES2+.associateAndroidTag, is used to associate the eSIM profiles with the tag BF76. The API may comprise an identifier linking the tag to the specific set of eSIM profiles, type of eSIM profile, total number of eSIM profiles, and the tag BF76. Further, the operator 302 ensures that the eSIM profiles are booked in the SM-DP+ 304 and the tag BF76 is added to the eSIM profile metadata. Upon associating the tag BF76 with the eSIM profiles, the operator 302 generates unique activation codes for each eSIM profile. The activation codes are securely transmitted to the entity 306, enabling the entity 306 to manage distribution to the entity user device 308.

In an embodiment, the entity user device 308 interact with the entity's mobile application to purchase a subscription or eSIM service. Once a subscription is purchased, the entity 306 may generates or retrieves the corresponding activation code and delivers it to the entity user device 308. Further, the entity user device 308 initiates the eSIM activation process by submitting the activation code via the mobile application. The application communicates with the Android Local Profile Assistant (LPA) using Android APIs to request the downloading of the eSIM profile. Further, the LPA interacts with the SM-DP+ 304 through the ES9+ API. The SM-DP+ verifies the activation code and the tag BF76. Further, the SM-DP+ 304 confirms that the eSIM profile is authorized for the entity user device 308. The SM-DP+ 304 further Initiates the download of the eSIM profile to the entity user device 308.

In an embodiment, the SM-DP+ 304 may validates the request from the entity user device 308 and matches the activation code with the corresponding eSIM profile metadata. The tag BF76 is embedded in the eSIM profile metadata, ensuring that the eSIM profile is tied to the entity 306. Further, the eSIM profile is securely downloaded and activated to the entity user device 308, enabling the user to start using the eSIM service provided by the entity 306.

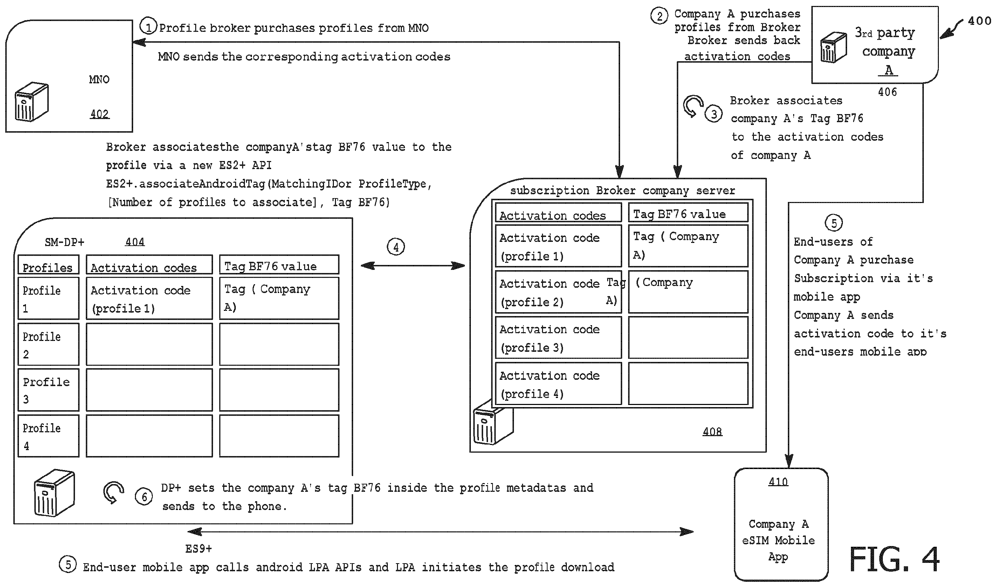

FIG. 4 illustrate an exemplary flow chart of a system 400 for distributing the eSIM profiles, in accordance with an exemplary embodiment. FIG. 4 is explained in conjunction with FIGs. 1, 2, 3A, and 3B. The system 400 may comprise an operator 402, a Subscription Management Data Preparation Plus (SM-DP+) 404, an entity 406, a broker server 408, and an entity user device 410 connected via a communication network.

In an embodiment, the operator 402 may be a Mobile Network operator (MNO) responsible for providing the eSIM profiles to the broker. The operator 402 generates and sends corresponding activation codes associated with each eSIM profile. The operator 402 may supply a wholesale stock of eSIM profiles to the broker for further distribution.

In an embodiment, the broker may act as an intermediary between the operator 402 and the entity 406 such as travel agencies, airlines etc. The broker may maintain a server 410 such as subscription broker company server to manage activation codes and the associated metadata. The broker may assign tag value such as tag BF76 to eSIM profiles based on the entity 406 requesting the eSIM profiles.

In an embodiment, the entity 406 may be a business that purchase eSIM profiles and activation codes from the broker to distribute them to the entity user device 410. The entity 406 uses its own mobile application to provide eSIM profile download and activation services to the entity user devices 410.

In an embodiment, the broker server 408 assigns and stores tag BF76 for each activation code to ensure compatibility with the entity's mobile application. The broker server 408 may maintain a database of activation codes and the associated tag BF76. Further, the broker server 408 implements a new ES2+ API (ES2+.associateAndroidTag) to dynamically associate the correct tag BF76 value with activation codes before passing them to the SM-DP+ 406.

In an embodiment, the SM-DP+ 404 is a Global System for Mobile Communications Association (GSMA) compliant system responsible for managing and delivering eSIM profiles to entity user device 410. The SM-DP+ 404 receives tag BF76 from the broker server 408 via the ES2+ API and embeds it into the corresponding eSIM profiles.

In an embodiment, the entity user device 410 comprises a mobile application provided by the entity 406. In some embodiments, the users of the entity user device 410 may input the activation code into the mobile application, which uses Android's Local Profile Assistant (LPA) APIs to trigger the download of the eSIM profile. In simpler words, the mobile application may serve as the platform for the users to activate and manage the eSIM profiles.

In an embodiment, the broker may obtain eSIM profiles from the operator 402, along with the corresponding activation codes. The eSIM profiles are maintained in a wholesale inventory and are not yet tagged with specific tag BF76 of the entity 406. Further, the entity 406 may purchase a batch of activation codes from the Broker. The activation codes may be later provided to the entity user device 410 via the mobile application installed in the entity user device 410. Further, the broker assigns the tag BF76 value to the activation codes purchased by the entity 406. The tag BF76 association is handled by the broker server 408 using the ES2+ API (ES2+.associateAndroidTag). The tag BF76 value ensures that the eSIM profile is compatible with the mobile application. Further, the SM-DP+ 404 receives the updated tag BF76 for the activation codes from the Broker server 408 via the ES2+ API, ensuring that the tag BF76 value is embedded into the eSIM profile metadata before delivery.

Further, the entity user device 410 receives the activation code through the mobile application. The mobile application initiates the download of the eSIM profile from the SM-DP+ 404 using the android LPA. The profile metadata including the tag BF76 allows the mobile application to enable and manage the eSIM profile seamlessly. Further, the SM-DP+ 404 delivers the eSIM profile to the entity user device 410, embedding the tag BF76 value that matches the mobile application signature. The user may now access the eSIM profile from the entity user device 410.

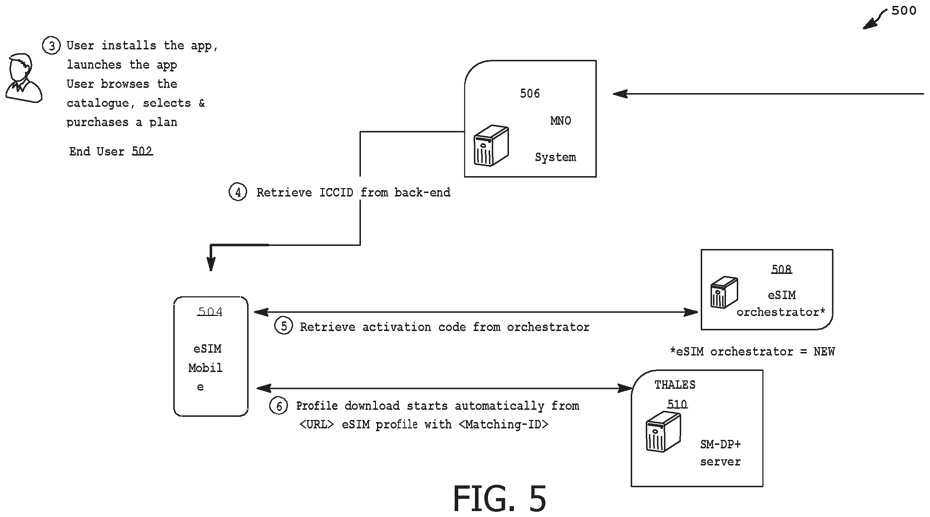

FIG. 5 illustrates an exemplary flow chart of a system 500 for retrieving the eSIM profiles from a Subscription Manager Data Preparation Plus (SM-DP+) 510, in accordance with an exemplary embodiment. FIG. 5 is explained in conjunction with FIGs. 1, 2, 3A, 3B, and 4. The system 500 may comprise an end user 502, an entity user device 504, an operator 506, an eSIM orchestrator 508, and a SM-DP+ 510 connected via a communication network.

In an embodiment, the end user 502 may be an individual who installs a mobile application on the entity user device 504, browses available plans, and completes the purchase of an eSIM subscription. The end user 502 triggers the eSIM provisioning process via the mobile application. The mobile application acts as an interface for browsing eSIM plans, purchasing a subscription, and triggering profile downloads using APIs provided by the Android or iOS operating system. In an embodiment, the operator 506 may be a Mobile Network operator (MNO) responsible for creating and managing eSIM profiles. The operator 506 acts as the supplier of eSIM profiles to the entity such as travel companies, airlines, or enterprises. The operator 506 sells eSIM profiles and activation codes to the entity.

In an embodiment, the eSIM orchestrator 508 may act as an intermediary between the operator 506 and the SM-DP+ 510. The eSIM orchestrator 508 is responsible for retrieving activation codes from the operator 506. Further, the eSIM orchestrator 508 allocates resources dynamically and orchestrates the process to ensure compatibility of eSIM profiles with the entity user device 504. In an embodiment, the SM-DP+ 510 may be a GSMA-compliant backend server responsible for preparing and securely delivering eSIM profiles to entity user device 504. The SM-DP+ 510 may manage the final stage of eSIM profile provisioning, including securely delivering the profile from a predefined URL to the mobile application.

In an exemplary embodiment, the end user 502 may download and install mobile application on the entity user device 504. Once installed, the end user 502 may launch the mobile application and navigates through a catalogue of available subscription plans provided by the operator 506. Further, the end user 502 selects a plan, completes the purchase, and triggers the eSIM provisioning process by submitting the required payment and identification details through the mobile application.

In an embodiment, the mobile application may send a provisioning request to the backend system of the Mobile Network Operator (MNO). The provisioning request may comprise end user identification information such as email and phone number, selected plan details, and device information such as IMEI and EID. Further, the SM-DP+ 508 may begin preparing the necessary eSIM profile and metadata for the specific end user.

Further, the operator 506 stores eSIM profiles, generates and retrieves the Integrated Circuit Card Identifier (ICCID) corresponding to the selected subscription. The ICCID is a unique identifier for the eSIM profile. The operator 506 sends the retrieved ICCID to the eSIM Orchestrator 508. The eSIM Orchestrator 508 may retrieves the activation code from the operator 506 using the ICCID as a reference. Further, the eSIM Orchestrator 508 may add dynamic metadata or tag BF76 to the eSIM profile for personalization or carrier-specific configurations. The activation code is transmitted securely to the mobile application, enabling the mobile application to interact directly with the SM-DP+ 510.

Upon receiving the activation code and metadata from the eSIM Orchestrator 508, the SM-DP+ 510 prepares the eSIM profile to download in the entity user device 504. Further, the SM-DP+ 510 generates a secure profile download URL that points to the specific eSIM profile associated with the activation code and entity user device 504. In an embodiment, the mobile application communicates with the SM-DP+ 510 using the activation code and the profile download URL. The mobile application invokes system APIs provided by the entity user device 504 operating system such as Android LPA APIs to fetch the eSIM profile. Finally, the eSIM profile is downloaded to the entity user device 504 over a secure connection. Once the eSIM profile is downloaded, the eSIM is automatically activated on the entity user device 504, allowing the end user 502 to start using the eSIM for cellular connectivity.

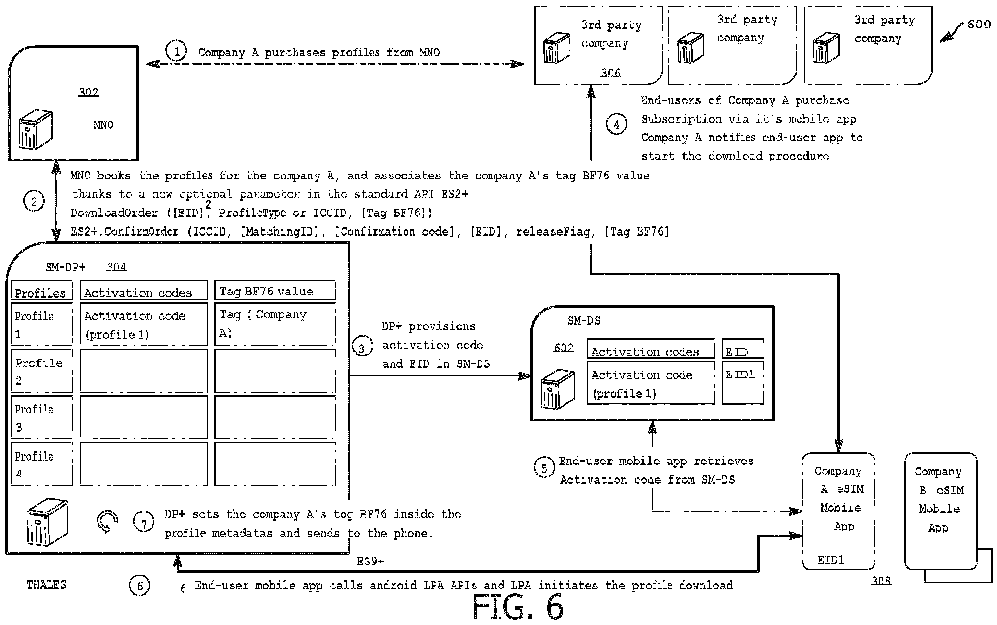

FIG. 6 illustrates an exemplary flow chart of a system 600 for distributing the eSIM profiles, in accordance with an exemplary embodiment. FIG. 6 is explained in conjunction with FIGs. 1, 2, 3, 4, and 5. The system 600 may be analogous to the system 300A and may comprise an operator 302, a Subscription Management Data Preparation Plus (SM-DP+) 304, an entity 306, an entity user device 308, and a Subscription Manager Discovery Server (SM-DS) 602 connected via a communication network. In an embodiment, the SM-DS 602 may act as a central directory that allows the entity user devices 308 to discover which SM-DP+ 304 has profiles available for them, facilitating the download of eSIM profiles.

In an embodiment, the entity 306 may obtain eSIM profiles from the operator 302, such as through purchase. The operator 302 acts as the profile provider, ensuring availability of eSIM profiles for the entity user devices 308. The operator 302 book the eSIM profiles for the entity 306 and associates the booked eSIM profiles with a Tag BF76 value in the SM-DP+ 304. The tagging of eSIM profiles with the Tag BF76 value allows the identification of eSIM profiles specifically assigned to the entity 306. In some embodiments, the operator 302 may utilizes an enhanced Application Programming Interface (API) to configure the eSIM profiles with the tag BF76. The API may be a ES2+.DownloadOrder configured to download order to the SM-DP+ 304, specifying parameters such as an Entity User Identifier (EID) or an Integrated Circuit Card Identifier (ICCID) and the tag BF76. Further, the API may be a ES2+.ConfirmOrder configured to confirm the purchase order and provide additional details such as the ICCID and the tag BF76 to ensure that the eSIM profile is only accessible to entity 306 mobile application. The SM-DP+ 304 provisions an activation code and assigns the EID to the SM-DS 602.

Further, when the entity user device 308 queries the SM-DS 602, the SM-DS 602 may retrieve the corresponding eSIM profile from the SM-DP+ 304. Further, the entity user device 308 may purchase eSIM profile subscriptions via the entity 306 mobile application. Once a purchase is made, the entity 306 may notifies the entity user devices 308 to start the eSIM profile download procedure. In an embodiment, the entity user device 308 queries the SM-DS 602 to check if a reserved profile is available. The SM-DS 602 recognizes the entity user device's 308 EID and sends the activation code to the entity user device 308. Upon receiving the activation code, the entity user device 308 calls the android LPA APIs to initiate the eSIM profile download request. The entity user device 308 may use the ES9+ API to communicate with the SM-DP+ 304 to request the eSIM profile. Upon receiving the eSIM profile download request, the SM-DP+ 304 sets the Tag BF76 value inside the eSIM profile metadata. Further, the SM-DP+ 304 sends the eSIM profile to the entity user device 308, ensuring that the correct operator 302 specific eSIM profile is installed.

In an embodiment, the SM-DP+ 304 reserves a unique profile (identified by the activation code) for a given entity user device 308 (identified by the EID). The SM-DP+ 304 may provision the activation code and EID on the SM-DS 602. Further, when the entity user device 308 queries the SM-DS 602 to see if a profile has been reserved for it, the SM-DS 602 recognizes the entity user device's 308 EID and transmit the activation code to the entity user device 308. Finally, the entity user device 308 use the activation code to initiate the eSIM profile download from the SM-DP+ 304.

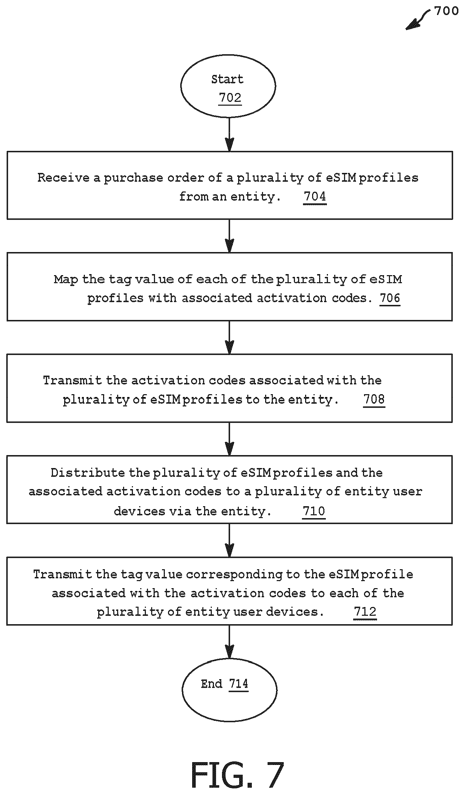

FIG. 7 illustrates an exemplary flow chart of a method 700 for distributing the eSIM profiles, in accordance with an example embodiment. It will be understood that each block of the flow diagram of the method 700 may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory of the processing engine 102, employing an embodiment of the present disclosure and executed by the processor 104. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions.

FIG. 7 is explained in conjunction with elements from FIGs. 1, 2, 3A, 3B, 4, 5, and 6. At step 702, the method 700 is initiated. The method 700, at step 704 may comprise receiving a purchase order of a plurality of eSIM profiles from an entity 114 by a Subscription Manager Data Preparation Plus (SM-DP+) 304. The purchase order comprises a tag value corresponding to each of the plurality of eSIM profiles. In an embodiment, the purchase order is a formal request made by the entity 114 to the SM-DP+ 304 for a set of eSIM profiles. The SM-DP+ 304 may store a plurality of eSIM profiles and books a set of eSIM profiles for the entity 114 along with the activation codes. The tag value may be a tag BF76 which act as identifiers of the eSIM profiles. In simpler words, the entity 114 sends a purchase order to the SM-DP+ 304, requesting multiple eSIM profiles. The purchase order specifies quantity of eSIM profiles required and the tag BF76 for each eSIM profile, which may represent unique identifiers or metadata for the eSIM profiles. Further, the SM-DP+ 304 receives the order and prepares to process the purchase order by generating or retrieving the requested eSIM profiles, mapping them to the provided tag BF76.

The method 700, at step 706 may comprise mapping the tag value of each of the plurality of eSIM profiles with associated activation codes by the SM-DP+ 304. To map the tag value, the method 700 may comprise receiving the tag value as input. An Application Programming Interface (API) is configured within the SM-DP+ 304 for receiving the tag value. In simpler words, the SM-DP+ 304 receives the tag values through a configured API. For each eSIM profile, the SM-DP+ 304 maps the corresponding tag value to the activation code associated with that eSIM profile. Once the mapping is complete, the SM-DP+ 304 associates each tag value with the corresponding activation code in a database.

The method 700, at step 708, may comprise transmitting the activation codes associated with the plurality of eSIM profiles to the entity 114 by the SM-DP+ 304. Upon mapping the tag value, the SM-DP+ 304 may retrieves the activation codes linked to the requested eSIM profiles. Further, the SM-DP+ 304 transmits the activation codes to the entity 114.

The method 700, at step 710, may comprise distributing the plurality of eSIM profiles and the associated activation codes to a plurality of entity user devices 112 via the entity 114 by the SM-DP+ 304. The entity 114 may receive the eSIM profiles and activation codes from the SM-DP+ 304 via secure APIs. Further, the entity 114 distributes the eSIM profiles and the activation codes to the entity user devices 112. To distribute the eSIM profiles, the entity 114 may provide a mobile application to the entity user device 112 that facilitates the secure delivery and installation of the eSIM profile. Upon receiving the activation code and eSIM profile download link, the entity user device 112 may use securely download and activate the eSIM profile.

The method 700, at step 712, may comprise transmitting the tag value corresponding to the eSIM profile associated with the activation codes to each of the plurality of entity user devices 112. To transmit the tag value to each of the plurality of entity user devices 112, the method 600 may comprise setting the tag value in the eSIM profile metadata by the SM-DP+ 304. The method 700 may further comprise enabling each of the plurality of entity user devices 112 to download the eSIM profile via a mobile application. In simpler words, the SM-DP+ 304 assigns the unique tag value to each eSIM profile. The tag value is added to the eSIM profile's metadata. Further, the SM-DP+ 304 transmits the tag value to the user devices 112 through the entity 114. Once the tag value is received, the mobile application on the entity user device 112 uses it to request the eSIM profile from the SM-DP+ 304. The mobile application ensures that only the eSIM profile corresponding to the tag value is downloaded, eliminating the risk of mismatched profiles.

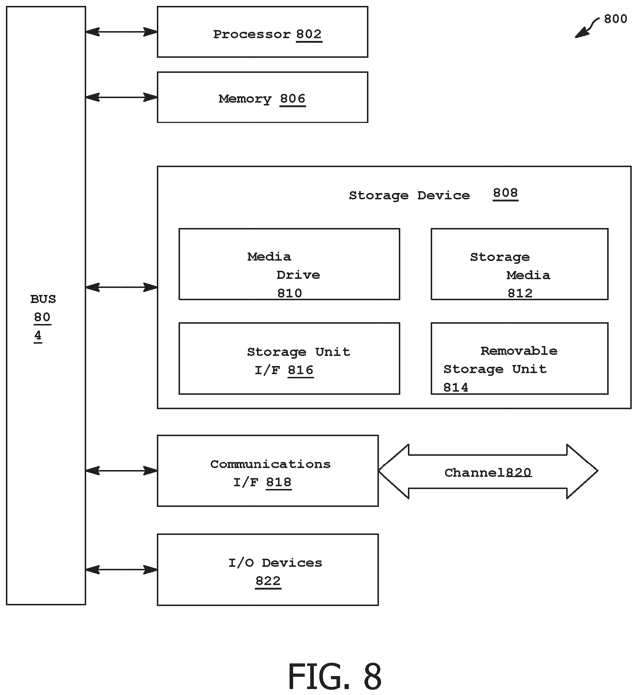

FIG. 8 illustrates an exemplary computing system 800 for implementation of a method for distributing the eSIM profiles, in accordance with an exemplary embodiment.

The computing system 800 may represent, for example, an end device that involves network connection. In an embodiment, the end device may comprise, but not limited to a smart phone, a laptop computer, a desktop computer, a workstation, a portable computer, a handheld, or a mobile device. In an embodiment, the computing system 800 may represent, for example, an end-device with the provision of mobility. Examples of the end-device with the provision of mobility may comprise but not limited to a Telematics Control Unit (TCU), an infotainment system, a Vehicle-to-Everything Device (V2X) device, an On-board Diagnostics Device (OBD), an Advanced Driver Assistance Systems (ADAS) sensor, and the like. The computing system 800 may comprise one or more processors, such as a processor 802 that may be implemented using a general or special purpose processing engine such as, for example, a microprocessor, microcontroller or other control logic. In this example, the processor 802 is connected to a bus 804 or other communication medium. In an embodiment, examples of processor 802 may comprise, but are not limited to, microcontrollers, microprocessors, digital signal processors (DSPs), application-specific integrated circuits (ASICs), field-programmable gate arrays (FPGAs), system-on-chip (SoC) components, or any other suitable programmable logic devices, system-on-a-chip processors or other future processors.

The computing system 800 may also comprise a memory 806 (main memory), for example, Random Access Memory (RAM) or other dynamic memory, for storing information and instructions to be executed by the processor 802. The memory 806 also may be used for storing temporary variables or other intermediate information during execution of instructions to be executed by the processor 802. The computing system 800 may likewise comprise a read only memory ("ROM") or other static storage device coupled to bus 804 for storing static information and instructions for the processor 802.

The computing system 800 may also comprise a storage device 808, which may comprise, for example, a media drive 810 and a removable storage interface 814. The media drive 810 may comprise a drive or other mechanism to support fixed or removable storage media, such as a hard disk drive, a floppy disk drive, a magnetic tape drive, an SD card port, a USB port, a micro-USB, an optical disk drive, a CD or DVD drive (R or RW), or other removable or fixed media drive. A storage media 812 may comprise, for example, a hard disk, magnetic tape, flash drive, or other fixed or removable medium that is read by and written to by the media drive 810. As these examples illustrate, the storage media 812 may comprise a computer-readable storage medium having stored there in particular computer software or data.

In some embodiments, the storage devices may comprise other similar instrumentalities for allowing computer programs or other instructions or data to be loaded into the computing system 800. Such instrumentalities may comprise, for example, a removable storage unit 814 and a storage unit interface 816, such as a program cartridge and cartridge interface, a removable memory (for example, a flash memory or other removable memory module) and memory slot, and other removable storage units and interfaces that allow software and data to be transferred from the removable storage unit 814 to the computing system 800.

The computing system 800 may also comprise a communications interface 818. The communications interface 818 may be used to allow software and data to be transferred between the computing system 800 and external devices. Examples of the communications interface 818 may comprise a network interface (such as an Ethernet or other NIC card), a communications port (such as for example, a USB port, a micro-USB port), Near field Communication (NFC), etc. Software and data transferred via the communications interface 818 is in the form of signals which may be electronic, electromagnetic, optical, or other signals capable of being received by the communications interface 818. These signals are provided to the communications interface 818 via a channel 820. The channel 820 may carry signals and may be implemented using a wireless medium, wire or cable, fiber optics, or another communications medium. Some examples of the channel 820 may comprise a phone line, a cellular phone link, an RF link, a Bluetooth link, a network interface, a local or wide area network, and other communications channels.

The computing system 800 may further comprise Input/Output (I/O) devices 822. Examples may comprise, but are not limited to a display, keypad, microphone, audio speakers, vibrating motor, LED lights, etc. The I/O devices 822 may receive input from a user and also display an output of the computation performed by the processor 802. In this document, the terms "computer program product" and "computer-readable medium" may be used generally to refer to media such as, for example, the memory 806, the storage devices 808, the removable storage unit 814, or signal(s) on the channel 820. These and other forms of computer-readable media may be involved in providing one or more sequences of one or more instructions to the processor 802 for execution. Such instructions, generally referred to as "computer program code" (which may be grouped in the form of computer programs or other groupings), when executed, enable the computing system 800 to perform features or functions of embodiments of the present disclosure.

In an embodiment where the elements are implemented using software, the software may be stored in a computer-readable medium and loaded into the computing system 800 using, for example, the removable storage unit 814, the media drive 810 or the communications interface 818. The control logic (in this example, software instructions or computer program code), when executed by the processor 802, causes the processor 802 to perform the functions of the disclosure as described herein.

As will be appreciated by those skilled in the art, the techniques described in the various embodiments discussed above are not routine, or conventional, or well understood in the art. The techniques discussed above provide for innovative solutions to address the challenges associated with updating and modifying the attributes stored in the eWallet. The disclosed techniques offer several advantages over the existing methods as listed in below paragraphs.

By allowing tag BF76 to be dynamically set during the eSIM profile download, the present disclosure eliminates the need to predefine and manage separate stocks of eSIM profiles for each third-party application. The present disclosure ensures streamlined operations for Mobile Network Operators (MNOs) and reduces profile management complexity.

The present disclosure introduces a method, and a system supports distribution of eSIM profiles to multiple partners such as, airlines, travel agencies without requiring customized metadata for each partner.

The present disclosure introduces a method and system that enable end-users to manage multiple profiles from various MNOs directly through a single third-party mobile app without relying on Quick Response (QR) codes, providing a seamless mobile app experience.

The present disclosure provides a method and a system that allows travel companies, airlines, and other non-MNO partners to offer eSIM profiles from multiple providers within their apps, opening new revenue streams and competitive pricing opportunities for users based on regional connectivity.

By dynamically assigning a single tag BF76 value per eSIM profile, the present disclosure avoids potential issues with devices that cannot process chained lists or large metadata sizes.

The present disclosure introduces a system and a method that form the basis for evolving eSIM standards, addressing current gaps in profile management and tag assignment.

The disclosed techniques offer several applications as listed in below paragraphs.

Airlines, travel agencies, and other travel companies can integrate the present disclosure into their mobile applications, allowing travellers to download and manage eSIM profiles from multiple Mobile Network Operators (MNOs) without needing QR codes or separate carrier applications.

MNOs may use the present disclosure to wholesale eSIM profiles to third-party businesses such as enterprises or service providers, which can then distribute them to end-users through their own branded mobile applications.

Consumer-focused eSIM applications can implement the present disclosure to provide users with a streamlined experience for activating, switching, or updating eSIM profiles directly within a single app.

Enterprises with large mobile workforces can leverage the present disclosure to distribute eSIM profiles from multiple carriers to their employees' devices while managing carrier privileges centrally

The present disclosure may be extended to IoT devices that require dynamic connectivity across different networks, ensuring the correct carrier privileges are applied based on the device's controlling application.

The present disclosure facilitates the delivery of competitive roaming solutions by enabling third-party apps to manage multiple carrier profiles, ensuring cost-effective connectivity options for international travellers.

Companies may offer users dynamic access to the best carrier options based on location or pricing, optimizing connectivity without being tied to a single global provider.

Many modifications and other embodiments of aspects of the disclosure set forth herein will come to mind to one skilled in the art to which these aspects pertain having the benefit of the teachings presented in the foregoing descriptions and the associated drawings. Therefore, it is to be understood that the disclosure is not to be limited to the specific embodiments disclosed and that modifications and other embodiments are intended to be comprised within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

It is to be understood that the above description is intended to be illustrative, and not restrictive. For example, the above-discussed embodiments may be used in combination with each other. Many other embodiments will be apparent to those of skill in the art upon reviewing the above description.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

The benefits and advantages which may be provided by the present disclosure have been described above with regard to specific embodiments. These benefits and advantages, and any elements or limitations that may cause them to occur or to become more pronounced are not to be construed as critical, required, or essential features of any or all of the embodiments.

While the present disclosure has been described with reference to particular embodiments, it should be understood that the embodiments are illustrative and that the scope of the disclosure is not limited to these embodiments. Many variations, modifications, additions, and improvements to the embodiments described above are possible. It is contemplated that these variations, modifications, additions, and improvements fall within the scope of the disclosure.

## Claims

1. A method (700) for distributing Embedded Subscriber Identity Module (eSIM) profiles, the method (700) comprising:
receiving, by a Subscription Manager Data Preparation Plus (SM-DP+) (304), a purchase order of a plurality of eSIM profiles from an entity (114), wherein the purchase order comprises a tag value corresponding to each of the plurality of eSIM profiles;
mapping, by the SM-DP+ (304), the tag value of each of the plurality of eSIM profiles with associated activation codes;
transmitting, by the SM-DP+ (304), the activation codes associated with the plurality of eSIM profiles to the entity (114);
distributing, by the SM-DP+ (304), the plurality of eSIM profiles and the associated activation codes to a plurality of entity user devices (112) via the entity (114); and
transmitting, by the SM-DP+ (304), the tag value corresponding to the eSIM profile associated with the activation codes to each of the plurality of entity user devices (112).

2. The method (700) according to claim 1, wherein the purchase order of the entity (114) is placed with a Mobile Network Operator (MNO) (302) or a broker.

3. The method (700) according to claims 1 and 2, wherein the plurality of entity user devices (112) comprises a Local Profile Assistant (LPA) Application Programming Interface (API) configured to connect with the SM-DP+ (304).

4. The method (700) according to any of the previous claims, wherein mapping the tag value comprising:
receiving, by the SM-DP+ (304), the tag value as input, wherein an Application Programming Interface (API) is configured within the SM-DP+ (304) for receiving the tag value.

5. The method (700) according to any of the previous claims, wherein transmitting the tag value to each of the plurality of entity user devices (112) comprising:
setting, by the SM-DP+ (304), the tag value in the eSIM profile metadata; and
enabling, by the SM-DP+ (304), each of the plurality of entity user devices (308) to download the eSIM profile via a mobile application.

6. A system (100) for distributing Embedded Subscriber Identity Module (eSIM) profiles, the system (100) comprising:
an entity (114) configured to order a plurality of eSIM profiles;
a plurality of entity user devices (112) configured to download at least one eSIM profile from the entity (114); and
a processing engine (102) coupled to a memory (106), wherein the processing engine (102) is configured to execute instructions stored in the memory (106) to:
receive a purchase order of a plurality of eSIM profiles from an entity (114), wherein the purchase order comprises a tag value corresponding to each of the plurality of eSIM profiles;
map the tag value of each of the plurality of eSIM profiles with associated activation codes at a Subscription Manager Data Preparation Plus (SM-DP+) (304);
transmit the activation codes associated to the plurality of eSIM profiles to the entity (114);
distribute the plurality of eSIM profiles and the associated activation codes to a plurality of entity user devices (112) via the entity (114); and
transmit the tag value corresponding to the eSIM profile associated with the activation codes from the SM-DP+ (304) to each of the plurality of entity user devices (112).

7. The system (100) according to claim 6, wherein the purchase order of the entity (114) is placed with a Mobile Network Operator (MNO) (302) or a broker.

8. The system (100) according to claim 6 and 7, wherein each of the plurality of entity user devices (112) comprises a Local Profile Assistant (LPA) Application Programming Interface (API) configured to connect with the SM-DP+ (304).

9. The system (100) according to any of the previous claims, wherein to map the tag value, the processing engine (102) is configured to:
configure an Application Programming Interface (API) within the SM-DP+ (304), wherein the SM-DP+ (304) is configured to accept the tag value as input; and
verify the tag value matches a signature of the plurality of entity user devices (112).

10. The system (100) according to any of the previous claims, wherein to transmit the tag value to each of the plurality of entity user devices (112), the processing engine (102) is configured to:
set the tag value in the eSIM profile metadata by the SM-DP+ (304); and
enable each of the plurality of entity user devices (112) to download the eSIM profile via an application from the SM-DP+ (304).

11. A method for distributing Embedded Subscriber Identity Module (eSIM) profiles, the method comprising:
transmitting, by an entity user device (112), a purchase order of a plurality of eSIM profiles to an operator (302) via an entity (114), wherein the purchase order comprises a tag value corresponding to each of the plurality of eSIM profiles;
receiving, by the entity user device (112), the plurality of eSIM profiles and the associated activation codes from a Subscription Manager Data Preparation Plus (SM-DP+) (304), wherein the SM-DP+ (304) comprises the tag value corresponding to each of the plurality of eSIM profiles associated with the activation codes; and
retrieving, by the entity user device (112), the tag value corresponding to the eSIM profile and the associated activation code from the SM-DP+ (304).

12. The method according to claim 11, wherein the entity user device (112) is associated with the entity (114).

13. The method according to claims 11 and 12, wherein the entity user device (112) comprises a Local Profile Assistant (LPA) Application Programming Interface (API) configured to connect with the SM-DP+ (304).

14. The method according to any of the previous claims, further comprising:
verifying, by the entity user device (112), the tag value matches a signature of the entity user device (112).

15. The method according to any of the previous claims, wherein retrieving the plurality of eSIM profiles and the associated activation codes comprising:
initiating, by the entity user device (112), the LPA API to connect with the SM-DP+ (304).
